# EUROPEAN PATENT SPECIFICATION

(11) **EP 1 221 091 B1**
(45) Date of publication and mention of the grant of the patent: **24.09.2003**
(21) Application number: 99962449.7
(22) Date of filing: 23.12.1999
(51) Int. Cl.: G06F 9/445

(54) **LOADING OBJECT-ORIENTED COMPUTER PROGRAMS**
LADEN VON OBJEKTORIENTIERTEN RECHNERPROGRAMMEN
CHARGEMENT DE PROGRAMMES INFORMATIQUES ORIENTES-OBJET

(30) Priority: 14.09.1999 GB 9921721
(43) Date of publication of application: 10.07.2002
(73) Proprietor: TAO GROUP LIMITED, Earley, Reading RG6 1AZ (GB)
(72) Inventor: HINSLEY, Christopher, Andrew, Berkshire RG41 1NY (GB)
(74) Representative: Maggs, Michael Norman
(86) International application number: GB9904413
(87) International publication number: WO01020449

(56) References cited:
- EP-A- 0 913 769
- EP-A- 0 930 567
- WO-A-97/42728
- WO-A-98/37486
- US-A- 5 155 847
- ANONYMOUS: "Debugging JITted Java Code" RESEARCH DISCLOSURE, vol. 42, no. 420, 1 April 1999 (1999-04-01), XP002143897 Havant, UK, article No. 42092
- ANONYMOUS: "Improving Java's Instanceof Operator: Downloading Classes On Demand" RESEARCH DISCLOSURE, vol. 41, no. 412, 1 August 1998 (1998-08-01), XP002143898 Havant, UK, article No. 41266

## Description

The invention relates generally to methods of and computer systems for loading object-oriented computer programs. More specifically, although not exclusively the invention is concerned with object-oriented programs in which the code is provided in the form of class files, each containing a plurality of methods.

A well known example of an object-oriented programming language is "Java" (a trade mark of Sun Microsystems Inc.). A "Java implementation" is a software system which allows a software application consisting of one or more class files to be run. These class files must conform to some version of the standard Java Virtual Machine Specification, as published by Sun Microsystems Inc. A class file defines the data and program code required for a particular class.

Although there is some interaction, the Java implementation can conceptually be divided into two parts:
- The Java Virtual Machine (JVM). This reads the class files and executes the instructions contained within them in a way which conforms to some version of Sun's Java Virtual Machine Specification. Some of the instructions contained within a class may reference the data or program code of other classes; the JVM also manages such relationships between classes.
- The Java Class Library. This is a set of predefined classes with data and program code which act in a way conforming to Sun's Java Class Library Specification. These library classes could be implemented in some way other than as real class files, for example using the C or assembler programming languages, in which case the JVM must ensure that references to their data and program code work in the same way as references to classes which originated from real class files.

The program code in a class file is in an instruction format known as Java bytecode (JBC), or simply as bytecode. Each method in the class has its own sequence of bytecode. The bytecode for a method consists of a sequence of JBC instructions.

There are two schemes which JVMs use to execute the bytecode:
- An interpreter. In this scheme, the JVM contains an interpreter, which is a piece of program code which executes the bytecode by looking at each JBC instruction in turn, decoding it, and performing the actions demanded by it. While this approach is the simplest to implement, its disadvantage is that it is slower than the alternative, since many steps of the interpreter program are required to interpret a single JBC instruction.
- A compiler. In this scheme, the JVM converts the JBC instructions of the bytecode into machine code instructions understood by the CPU being run on (native machine code), before any execution starts. Then, to execute the program code for a method, the compiled machine code is executed instead. There is a time overhead for the initial compilation from JBC instructions to machine code instructions, although this may be done during the preparation of the application rather than when the application is started. Once the compilation has been performed, the method's program code runs much faster, at a speed comparable with other traditionally compiled languages such as C. A special case of the compiler scheme is a just-in-time compiler (JIT), in which the bytecode for a class is compiled just before it is first used.

Some JVMs use a combination of the two schemes, where only program code which is being executed many times is compiled, and the rest is interpreted.

Linking is the process by which a reference from one class C1 to another class C2 (or data or a method in C2) is resolved. If C2 is not already loaded, it is loaded, and compiled if using the compiler scheme, and itself linked. Then the reference in C1 to C2 (or some item of data or a method in C2) is modified such that there is now a direct pointer to whatever in C2 is being referred to.

Sun's Java Virtual Machine Specification allows for a range of linking schemes:
- Static linking: The loading and linking of all classes of the application is performed when the application is prepared. This scheme is typically used when an application is embedded permanently in a device.
- Dynamic load time linking: Class C2 is loaded the first time another class is loaded which refers to C2 (or some data item or method within C2).
- Dynamic late binding: Class C2 is loaded the first time a JBC instruction (or its compiled equivalent) which refers to C2 (or some data item or method within C2) is executed.

In operation. when a particular method of a particular class is invoked. the particular class required may or may not already be resident in the JVM. If the required class is not resident. then the class file for that class must first be loaded from outside the JVM (for example from a disk or from a network), linked and initialised into the JVM. Then, the required method can be found by looking down the list of methods for the class. Once the required method has been found, the Java bytecode of that method is executed until a return is encountered, whereupon the method has ended and control is returned to the invoker of the method. A method invocation can also be terminated by an exception being thrown which is not caught in the method.

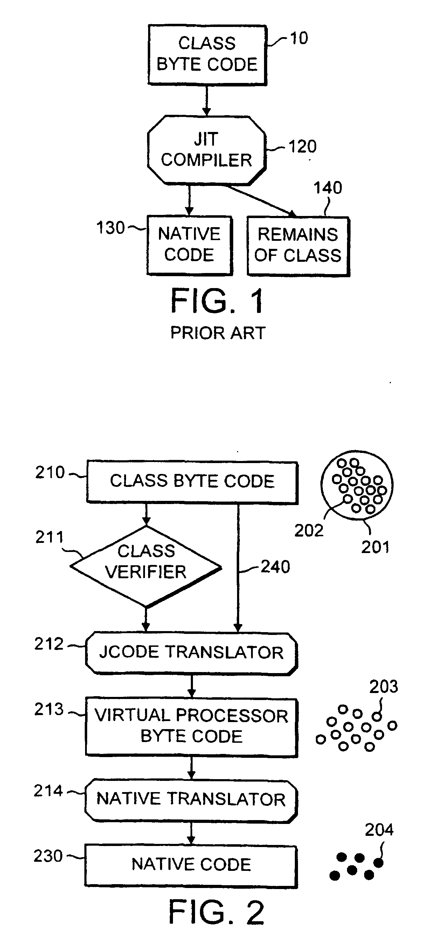

Figure 1 illustrates a typical prior art implementation in which the JVM makes use of a JIT compiler. The JIT compiler 120 takes the class bytecode 110, just before it is to be used, and translates it into native code 130 ready for execution on a specific processor. The remains of the class 140 (or possibly the entirety of the class) remains available in the memory in case the native code 130 should need to refer to it while running.

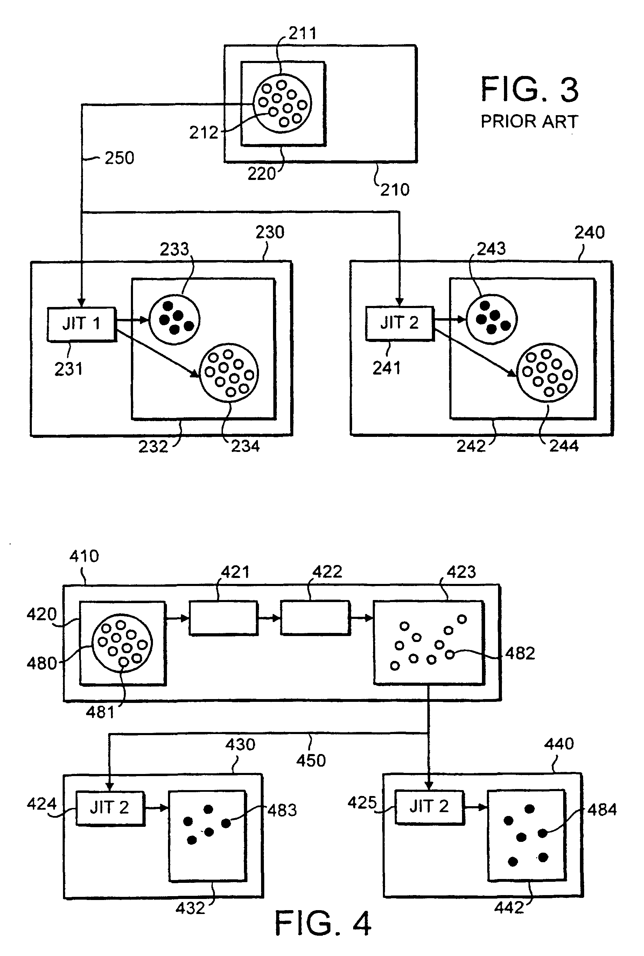

Figure 3 illustrates a typical prior art JVM implementation in a multiprocessor environment. A server 210 maintains a class store 220 for holding the bytecode of the various classes that may be required by the client processors 230,240. Within the class store 220 is shown a typical Java class 211 containing within it a plurality of individual methods 212.

The server 210 supplies the class files 211, as necessary, across a communications network generally indicated at 250 to the clients 230,240. In this example, the processors 230,240 are of two different types - namely client type 1 and client type 2 respectively. Each of the clients maintains its own JIT, respectively 231,241, enabling it to compile the received class file 211 to its own version of native code 233,243, and to store that in its own native code store 232,242. In addition, and as previously described with reference to Figure 1, the remains of the class file 211 (or possibly the entire class file) will remain in local memory, as generally indicated at 234,244, in case the native code 233,243 should need to refer to it while running on the local processor.

In an alternative prior art arrangement (not shown) the client JITs 231,241 may be maintained on the server 210, with the conversion to native code being done there rather than at the clients 230.240.

There are several disadvantages with either prior art arrangement. Firstly, in each case, a large execution environment is required on each of the clients. In addition, either the Java class file 211 or the native versions 233,243 along with the class file remains 234,244 need to be transmitted across the communications network 250. Either approach is unsatisfactory in practice, particularly in the context of wireless client networks such as mobile cellular phone networks, since the class files are typically large.

The closest prior art is EP-A-0913769 (SUN MICROSYSTEMS, Inc), disclosing downloading class files from a server to a client platform and executing the bytecode either directly by way of an interpreter or using a JIT; the relevant features are set out in the pre-characterising portions of the independent claims. A further prior art document is "Debugging JITted Java Code" RESEARCH DISCLOSURE, vol. 42, no. 420, 1 April 1999, XP002143897 Havant, UK, article No. 42092.

According to a first aspect of the present invention there is provided a method of loading an object-oriented computer program as set out in the characterising portion of independent claim 1.

The method of the invention provides all of the dynamic features of the Java Virtual Machine (JVM), but with a substantially reduced footprint compared with conventional approaches.

In its preferred form, the invention provides fine granularity of binding/linking, loading, compilation and transmission across a communications network. More specifically, the granularity is at the method/tool level rather than the class level as with conventional object-oriented systems. The invention is particularly although not exclusively applicable to a Java Virtual Machine (JVM) environment. The invention provides for the entire range of JVM linking schemes, namely static linking, dynamic load time linking and dynamic late binding. Specific fields of application for preferred embodiments of the invention include wireless communications (wireless client networks), and specifically although not exclusively mobile cellular phone networks. The invention may also be applied to other embedded devices, preferably networked devices, such as (without limitation) hand-held computers, games consoles, cameras, or indeed any other type of networked or networkable device. In one embodiment the system may consist of or include a wireless network, whereas in other embodiments it may include a private or public fixed network, or the Internet. Where the client devices are not capable of wireless communication, provision may be made for them to be coupled to the Internet as required (for example via a standard modem or ISDN link). In such a way, the invention could be applicable to a wide range of embedded devices, including for example cameras, televisions, washing machines, motor vehicles or indeed virtually any other type of computer operated device that can be conceived of.

One advantage of the invention, when applied to wireless client networks, is that each individual transmission (of a method/tool) is of a significantly shorter duration than with conventional systems in which the entire class file has to be downloaded. This means that the network provider does not need to keep the virtual circuits of the network open for long periods. Each small method/tool to be transmitted can if necessary be routed differently. In addition, the transmission of smaller discrete chunks of data means that lower redundancy and error correction is required. The load on the network can therefore be reduced by a greater amount than would be expected merely by a consideration of the data transfer rates.

In its preferred form, the invention is particularly applicable for use with object-oriented computer programs that are to be compiled (rather than interpreted) prior to execution. When the invention is used in the context of a distributed computer system, the individual methods may be compiled either before or after they are sent across the network to the client device.

Preferably, the invention includes the preliminary step of translating the classes into a plurality of virtual processor tools which use the instruction set of a virtual processor. Then, the step of selecting one of the methods for execution may include selecting one of the virtual processor tools. When used in the context of a networked system, either the virtual processor tools may individually be transmitted across the network to the client device, or alternatively the individual virtual processor tools may first be compiled and the native compiled code transmitted across the network.

The invention further extends to a computer system as set out in the characterising portion of independent claim 17.

The invention extends not only to methods and apparatus for loading object oriented computer programs, but also to methods and apparatus for compiling such programs, binding such programs. executing such programs. and transmitting such programs across a communications network.

Finally, the invention also extends to a computer program for implementing any of the described methods whether or not embodied on a data carrier. It also extends to a data stream representative of a computer program for carrying out the described method.

It is to be understood that, where used in the description and claims, the word "code" includes data where that data is part of the program itself. Accordingly, but without limitation, the expression "code" includes such things as constants, variable names and types, flags, pointers, object names and so on.

The invention may be carried into practice in various ways and one specific embodiment will now be described, by way of example, with reference to the accompanying drawings, in which:
Figure 1 illustrates the operation of a conventional JIT compiler within a JVM;
Figure 2 illustrates the two-stage translation process of the preferred embodiment of the present invention;
Figure 3 shows a typical prior art client/server system;
Figure 4 illustrates the operation of the preferred embodiment of the invention within a client/server system;
Figure 4a illustrates a variation of the embodiment shown in Figure 4;
Figure 5 illustrates the operation of the present invention within a wireless network; and
Figure 6 illustrates certain aspects of the translation from bytecode to intermediate virtual processor code according to the preferred embodiment of the invention.

Figure 1, which has been described above, shows the way in which a JIT compiler within a JVM translates from processor-independent bytecode to processor-dependent native code for running on a particular processor. In the present invention, conversion from bytecode to native code takes place in two separate stages:
1. Conversion from the class file to an intermediate processor-independent form. This will be referred to as Virtual Processor or VP code. The converter itself is known in the preferred implementation as the "jcode translator".
2. Conversion from the intermediate VP form to the native machine code.

The converter here will be known as the "native translator".

Figure 2 illustrates in more detail the translation from class bytecode to native code. The class byte code 210 is first checked for validity by a class verifier 211. This checks not only the individual bytes themselves, but also checks for valid external and internal references. The class verifier if necessary loads additional classes to check the external references.

Once the code has been checked, it is passed to the jcode translator 212 which converts it, as described in more detail below, into VP code 213. The VP code 213 is then converted by the native translator 214 to the native code 230.

It is important to appreciate that the class verifier 211, the jcode translator 212 and the VP code 213 are all processor-independent. It is only the native translator 214 and of course the final native code 230 which is processor-specific.

Shown on the right hand side of Figure 2 is a schematic representation of the objects that are being manipulated during the translation process. The process starts with the class bytecode in the form of a Java class file 201 which consists of a plurality of individual methods 202. The jcode translator translates the class file into a plurality of individual virtual processor tools 203. Depending upon the application to be run, a selection is made of those virtual processor tools 203 which will be required, and those selected tools (and only those tools) are then translated by the native translator into individual native methods 204. It is important to appreciate that the entirety of the original class file 201 is not necessarily being passed through the native translator 214: only those virtual processor tools 203 which are actually needed by the application will be translated and ultimately stored for running on the client.

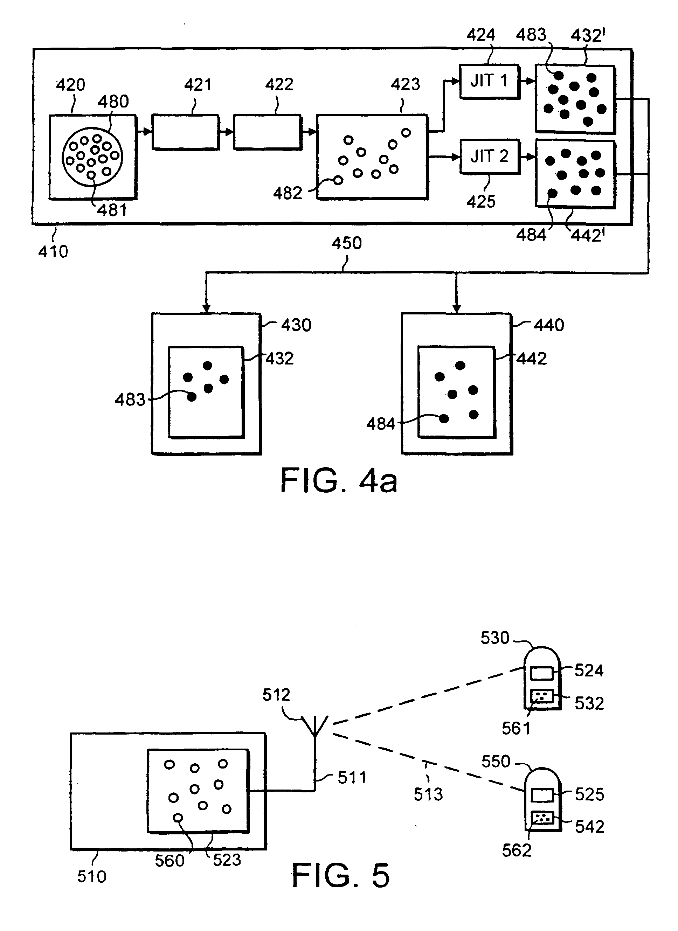

The use of the preferred embodiment within a heterogeneous multiprocessor environment is shown schematically in Figure 4. This should be compared with the corresponding prior art approach shown in Figure 3.

In Figure 4, the server 410 is serving two clients 430,440 (having different processors) via a communications network 450. All of the processor-independent calculation is carried out on the server; in particular, the server maintains a class store 420, a class verifier 421, a jcode translator 422 and a VP store 423. An initial Java class file 480, consisting of a plurality of methods 481, is translated via the two-stage process described previously, into a plurality of VP tools 482 which are stored within the VP store 423. The VP (processor-independent) tools can then be served individually, as required, across the network 450 to the individual clients. The VP tools are then translated by the individual client translators 424,425 into native methods 483,484 which are optimised for their respective processors. These native methods are stored within the respective native code stored 432,442.

The use of VP on the server, as shown in Figure 4, allows the verification of the class files and the first stage of the compilation (the conversion to VP code) to be performed once only by the server. Then, only the native translation (which differs according to the processor type) needs to be performed by the client device before execution. Such an arrangement makes it easy to supply updated classes at the server, without the server needing to know anything about the details of the particular clients that will wish to make use of those classes. An updated class needs to be amended once only, in the class bytecode, and then translated once only into VP. The VP is transmitted to the client devices, as necessary, and the final translation to native code can be carried out at the client in a way which is entirely transparent to the end user. In addition, no amendment to the server or to the VP code is required in the event that a new type of client comes onto the market which requires different native code. The client manufacturer simply provides the client with an appropriate native translator, and the device should operate without any manual intervention at the server.

With the approach described, it is not necessary to download across the network the Java class file 480, nor all of its individual methods 481. Only those VP tools which are actually required by the individual client applications need be transmitted across the network. The required VP tools may be either downloaded on demand (for example by means of a control signal transmitted from the client back to the server), or alternatively may be transmitted when the server determines that it is necessary. In one embodiment, for example, the server may transmit updated VP tools across the network in order to update an applications program which is running on the client. That could be done in real time, in a way which is entirely transparent to the end user. Alternatively or in addition the individual transmitted VP tools may represent "add-ins", or additional functionality that the user wishes to add to an application program to be run on the client. In one particularly convenient approach, when the user attempts to make use of functionality in an application program for which code is not available at the client, the client automatically transmits a signal to the server requesting that the necessary VP tools be downloaded. The server responds by transmitting the requested VP tools which are then translated into native form by the local native translator 424,425.

Figure 4a shows an alternative embodiment in which the individual native translators are maintained on the server. In Figure 4a, the reference numerals have the same meaning as those used in Figure 4.

In one version of this embodiment, a full collection of native methods for each of the client processors is stored on the server within respective native code stores 432',442'. Since it cannot necessarily be determined in advance which methods will be needed by the individual clients, it is preferred that the entirety of the VP tools 482 be passed through the respective native translators 424,425 to provide a comprehensive selection of native methods 483,484. When a particular new or updated method is called for by the client, or is required to be sent by the server, the appropriate individual native method is sent across the communications network 450. As before, only individual methods are sent. not the entire class. nor all of the native methods which have been created from the original class.

In yet a further alternative method. the server need not maintain a complete collection of pre-translated methods for each possible client processor. Instead, when a particular VP tool is needed, it is translated on the fly by the appropriate native translator 424,425 and the native method transmitted immediately to the client.

Once specific implementation, illustrated in Figure 5, is that of a mobile phone network. Individual mobile phones 530, 550 using the network each include a respective native translator 524, 525 and a native code store 532, 542. When it is required to upgrade the functionality of the phones, updated VP code is supplied from a VP store 523 on a central server 520. The updated VP code is sent via a land-based communications network 511 to a wireless transmitter 512. The code is then packetized and sent across a wireless link 513 to the individual phones. On receipt, the VP code is automatically translated into native and stored in the native code store. The whole process may be transparent to the phone user; or alternatively the updated code may be sent on receipt of a specific request from the phone user, via the wireless link 513.

Implementing a mobile telephone network (or indeed any other type of wireless client network) in this way allows the clients to download individual methods (each of which might be for example 100 bytes in length) instead of having to download an entire class (which might be for example 10 k). Transmitting individual methods in this way also has advantages for the wireless network provider since virtual circuits do not need to be maintained open for lengthy periods while large files are being transmitted. Each small individual method can be routed differently. Also, the transmission of smaller chunks of data reduces the need for redundancy and error correction techniques. thereby increasing the capacity of the network over and above that which would be expected merely by a comparison of raw data transfer rates.

For completeness, a detailed description will now be given of the preferred method by which the class file is converted into VP and the VP tools are converted into native. It will be understood that this is purely exemplary, and that the present invention is not limited to an embodiment in which there is a two-stage translation, first from bytecode into VP and then from VP into native.

Turning back now to Figure 2, further details will be given of the preferred two-stage translation from class bytecode 210 into native code 230. As previously described, the class verifier 211 checks the class bytecode for validity. The class verifier may in some embodiments be incorporated within the jcode translator, in which case the class bytecode 210 is passed straight to the jcode translator 212 as shown by the arrow 240.

The JVM and the bytecode instructions it implements are stack based, which means that operands (numbers, pointers to objects) are kept on a stack, on which the last item to be pushed on is the first to be popped off. A bytecode instruction typically removes one or more operands from the stack, performs some action, and pushes the result operand (if any) back on the stack. On the other hand, VP is register based, in that it has a set of registers which are addressed directly by the VP instructions. An instruction typically takes its operand(s) from register(s) specified in the instruction, performs some action, and puts the result operand (if any) into a further register specified in the instruction. This register based architecture is more similar to most real processors, except that VP has a very large number of registers, large enough such that any system converting to VP does not need to worry about how many there are.

VP instructions are based around expressions. A single instruction typically has one or two operands, and each operand can be a constant, a register, or an expression. An expression then has one or two operands, each of which can be a constant, a register or an expression. In this way, an arbitrarily complex instruction can be built up.

There now follows a more detailed description of how parts of a class file are converted. The description uses the term "fixup": this is a small item of data attached to a particular point in the compiler's output code or data which instructs the JVM that the code or data at that point needs to be modified in some way before it can be used. Fixups are used to change a native instruction or a data item such that the native code can obtain a direct reference to another class, or to a field or method therein.

A java class file consists of the following parts:
- A constant pool, which contains the constant numbers and names in other parts of the class file, instead of a name, there is a reference to a name which is stored here.
- Information such as the name of this class, the superclass and any direct superinterfaces.
- A list of fields, with information on each one.
- A list of methods, with information on each one. This information includes its code section. Thus there are several code sections, one for each method.

The Java class file is converted to VP tools as follows:
- A data tool. Despite its name, this has nothing to do with the data to be used by the class. Instead it contains information about a class, including but not limited to the names, parameters and types of all constructors. fields, methods and other entities which make up the API of a class. A typical use for this would be for reflection (i.e. the functionality in java.lang.reflect in a Java Library). Reflection is a programmatic interface to allow a programmer to enumerate and manipulate the constructors, fields, methods and other entities which belong to a class. The data tool is also used by the verifying jcode translators, in situations where either the Class file is not available, or where the class file has already been translated. Where the class is written in VP, there is no class file anyway.
- A class tool. This contains some housekeeping information used by the JVM (including the size of object to allocate, the size of the class's static data if any, and the superclass and superinterfaces), and code for none, some or all of the non-static methods.
- Zero or more method tools. Methods which do not appear in the class tool have their own individual tools. The decision on whether to place a method in its own tool can be based on a number of factors such as the size of the method.
- A fixup tool. The fixup tool typically returns a constant fixup value which is used to determine the offset within an object of a particular field. The tool is called at fixup time to provide the offset, and the binder/linker patches this offset into the code that wants to use it. It is thus used to implement both "get a field" and "put a field" in the bytecode.
More generally, the fixup tool returns data used for fixups. This can only be determined at fixup time and not at compile time. The data may include but is not limited to, the size of a class instance and the offset within a class instance of a field.
The data tool can be discarded if the java application is known not to use certain facilities (largely reflect), and the fixup tool can be discarded if the java application is to be embedded in a device which does not dynamically load further java classes.
The jcode translator uses a VP register for each item on the stack.

VP code does not directly implement the class file's mechanisms for accessing another class, method or field from within the bytecode. In the bytecode there are instructions for, but not limited to, calling a method (in this or another class), getting the contents of a field (in this or another class), pushing a value onto the stack, popping a value off the stack and setting the contents of a field. The jcode translator converts these into VP instructions which may do one of the following (this is not an exhaustive list):
- Call a non-static method (i.e. one to which an object pointer must be passed) in a class. VP has the concept of a class with methods, which is used to implement Java classes. Such methods can be called virtually (the actual method called depends on the class of the object whose pointer is passed) or non-virtually (the method called is in the class specified in the call).
- Call a subroutine. This is used to implement the bytecode's call of a static method (i.e. one to which no object pointer need be passed), and in some cases a non-static method.
- Get the value of the constant fixup from the fixup tool.

The constant pool within a class file is converted as follows:
- A constant pool entry containing a constant number (integer or floating point) is incorporated into the compiled version of the JBC instruction which references the constant number.
- A constant pool entry containing string data which is used directly by a JBC instruction is copied into the data attached to the compiler's output code.
- Other constant pool entries containing string data are not used directly, but are used when referred to by the constant pool types below, or by other parts of the class file.
- A constant pool entry referencing a class C causes a fixup referencing the class C (or the JVM's internal name for the class) to be attached to the compiler's output code/data such that a JBC instruction using this constant pool entry to refer to C is compiled to a native code sequence which, after applying the fixup, obtains access to class C's code and data.
- A constant pool entry referencing a field F in a class C causes a fixup referencing F in C (or the JVM's internal name for F in C) to be attached to the compiler's output code/data such that a JBC instruction using this constant pool entry to refer to F is compiled to a native code sequence which, after applying the fixup, obtains access to field F.
- A constant pool entry referencing a method M in a class C causes a fixup referencing M in C (or the JVM's internal name for M in C) to be attached to the compiler's output code/data such that a JBC instruction using this constant pool entry to refer to M is compiled to a native code sequence which, after applying the fixup, obtains access to method M.
- A constant pool entry giving a name and type of a field or method is not used directly, but is used when referred to by other constant pool entry types or other parts of the class file.

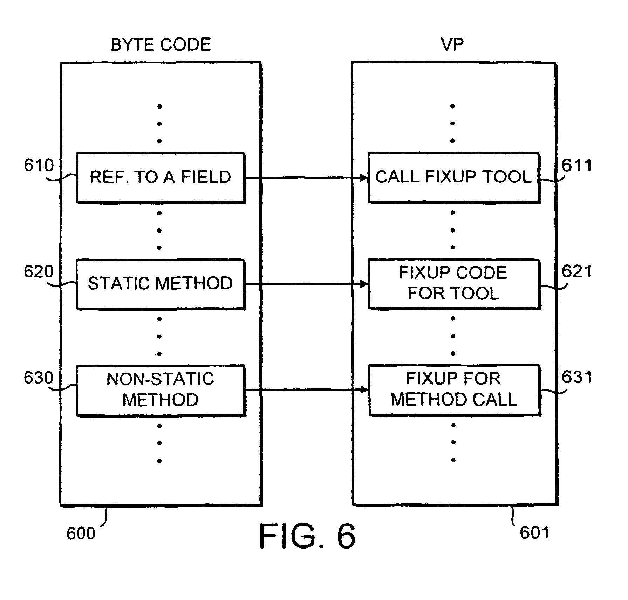

The code section within a class file is converted as follows:
- Code doing purely numerical calculations (ie where there is no reference to an external method) is translated straight from bytecode into a corresponding tool in VP.
- As shown in Figure 6, where the bytecode 600 has a reference 610 to a field, that is converted at fixup time by a call 611 to the fixup tool. The call to the fixup tool returns a value which references the location of the field. Thus, by the time the instruction is run it has been patched to contain the correct offset.
- A static method 620 is converted to a corresponding VP tool, but with added fixup code 621.
- A non-static method 630 has added to it a fixup for a method call (ie a reference to the method name). This will eventually become an atom in the final native code.

The calling conventions are rather different in bytecode and VP. In conventional byte code such as Java byte code, the parameters to be passed to a subroutine are placed on the stack, followed by a reference to the method to be called. A byte code instruction to call a method is then executed which takes the method reference from the stack, resolves it and starts executing the new method with the parameters from the stack. Control is returned to original method when a return instruction is executed. This is converted to VP which loads all the parameters into VP registers before executing a gos (goto subroutine) instruction which has been fixed up to point to the destination method (this fixup may be statically or dynamically bound). Execution is passed to the subroutine and returns when a 'ret' instruction is executed.

Other parts of the file are converted as follows:
- The name of the class determines the name used by the JVM to refer to the code and data output by the compiler.
- The name of the superclass becomes some reference to the superclass within the code and data output by the compiler. In the preferred implementation, the output data contains a pointer with a fixup attached such that, after linking, the pointer points to the superclass code and data.
- The name of each interface becomes some reference to the interface within the output code and data. In the preferred implementation, the output data contains a pointer for each interface with a fixup attached such that, after linking, the pointer points to the interface code and data.
- The debug information attached to each method (and the source filename which is stored in the class file), when present, is converted to a format suitable for the environment in which the JVM is running. In the preferred implementation, the debug information is converted to the same format used for non-Java parts of the system.

The final VP class comprises one or more named tools, normally including at least the data tool, the class tool, the fixup tool and zero or more method tools. The tool names are generated automatically by the jcode translator, each name being related to the name of the class and the function of each tool within the implementation of that class.

Turning back again to Figure 2, further details will now be given of the native translator which translates the VP code into native code. It will be understood, of course, that VP code is never itself run directly in a live application; it is always converted by the processor-dependent native translator into the appropriate native code for the processor on which it is to be executed.

The native translator 214 is quite a small piece of code (around 150k, depending upon the processor), so that it can easily be stored in memory within an embedded system. The translator 214 maps VP registers to the registers of the particular processor being used. The translator uses its knowledge of the real processor's register architecture to decide at each point in the output native code which VP registers should be mapped to the real processor's registers, and which should be kept in memory (which is slower to access). The translator also provides machine-dependent optimisation of instructions. Until the native code is bound in, it will still normally contain sections of fixup code. On binding (or sometimes at run-time) the fixup code will be replaced with appropriate machine-dependent instructions. For example, the fixup for a non-static method will be converted to an atom in the native code.

Both the jcode translator and the native translator are themselves preferably written in VP code and can thus be translated (using the native translator itself) to run on any desired platform. From that initial VP code, compiled versions of both translators may be provided in native code, optimized for the particular processor on which the translator is to execute. To compile the VP code for the jcode translator, that code is passed through the native translator. To compile the VP code for the native translator, that code is passed through the native translator itself.

Although the preferred embodiment uses the Java Virtual Machine, the overall inventive concept is more general, and it is not essential to use the JVM, or indeed Java at all. Where Java is used, however, the invention described allows Java-skilled applicators programmers to develop programs in their preferred language, without having to understand, or even to know anything about, VP code.

## Claims

1. A method of loading an object-oriented computer program comprising code provided in the form of classes each containing a plurality of methods (481), the method being **characterised by**
(a) selecting for execution one of the methods of one of the classes; and
(b) loading the selected method into an execution environment without necessarily loading into the execution environment the whole of the selected class.

2. A method as claimed in Claim 1 in which the selected method is loaded without necessarily loading into the execution environment all of the methods of the selected class.

3. A method as claimed in Claim 1 in which the selected method is loaded without necessarily loading into the execution environment any of the methods of the selected class other than the selected method.

4. A method as claimed in Claim 1 including compiling the selected method without necessarily compiling all of the methods of the selected class.

5. A method as claimed in Claim 1 including compiling a selected method without necessarily compiling any of the methods of the selected class other than the selected method.

6. A method as claimed in Claim 1 including transmitting the selected method across a communications network (450) from a server (410) to a client device (430, 440) on which the selected method is to be run, without necessarily transmitting all the methods of the selected class.

7. A method as claimed in Claim 1 including transmitting the selected method across a communications network (450) from a server (410) to a client device (430, 440) on which the selected method is to be run, without necessarily transmitting any of the methods of the selected class other than the selected method.

8. A method as claimed in Claim 1 in which the classes are Java classes.

9. A method as claimed in Claim 1 including the preliminary step of translating the classes into a plurality of virtual processor tools (482) which use the instruction set of a virtual processor.

10. A method as claimed in Claim 9 in which the step of selecting one of the methods for execution includes selecting one of the virtual processor tools.

11. A method as claimed in Claim 10 including compiling and loading the selected virtual processor tool without necessarily compiling and loading into the execution environment all of the virtual processor tools which were translated from the selected class.

12. A method as claimed in Claim 10 including compiling and loading the selected virtual processor tool without necessarily compiling and loading into the execution environment any of the virtual processor tools which were translated from the selected class, other than the selected tool.

13. A method as claimed in Claim 10 including transmitting the selected virtual processor tool across a communications network (450) from a server (410) to a client device (430, 440) on which the selected method is to be run, without necessarily transmitting all the virtual processor tools which were translated from the selected class.

14. A method as claimed in Claim 10 including transmitting the selected virtual processor tool across a communications network (450) from a server (410) to a client device (430, 440) on which the selected method is to be run, without necessarily transmitting any of the virtual processor tools which were translated from the selected class.

15. A method as claimed in Claim 13 or Claim 14 including compiling the selected virtual processor tool to native code prior to transmission across the communications network.

16. A method as claimed in Claim 13 or Claim 14 including compiling the virtual processor tool to native code at the client device, after transmission across the communications network.

17. A computer system comprising an execution environment, means for loading into the execution environment an object-oriented computer program comprising code in the form of classes each containing a plurality of methods (481), and means for selecting for execution one of the methods of one of the classes; **characterised in that** the system is operable to load the selected method into the execution environment without necessarily loading the whole of the selected class into the execution environment.

18. A computer system as claimed in claim 17, further comprising a server (410) in communication via a transmission means (450) with a plurality of client devices (430, 440), each having a respective execution environment.

19. A computer system as claimed in Claim 18 which transmits the selected method from the server to the said client device without necessarily transmitting all the methods of the selected class.

20. A computer system as claimed in Claim 18 which transmits the selected method from the server to the said client device without necessarily transmitting any of the methods of the selected class other than the selected method.

21. A computer system as claimed in Claim 18 in which the selected method is compiled by the server prior to transmission.

22. A computer system as claimed in Claim 18 in which the selected method is compiled by the client device after transmission.

23. A computer system as claimed in Claim 18 in which the server is configured to transmit an updated method to a client device when it determines that the said client device is using an outdated method.

24. A computer system as claimed in Claim 18 in which the server is configured to transmit an updated method to a client device when that updated method is requested by the said client device.

25. A computer system as claimed in Claim 18 in which the server is configured to transmit methods as required by a requesting client device, the requesting client device being configured to bind the received methods dynamically into its execution environment.

26. A computer system as claimed in Claim 18 in which the server stores a plurality of virtual processor tools (482), said tools using an instruction set of a virtual processor and being a translation of one or more classes of the said object-oriented program.

27. A computer system as claimed in Claim 26 in which the means for selecting one of the methods for execution includes means for selecting one of the virtual processor tools.

28. A computer system as claimed in Claim 27 in which the server transmits the selected virtual processor tool to the said client device without necessarily transmitting all of the virtual processor tools which were translated from the selected class.

29. A computer system as claimed in Claim 27 in which the server transmits the selected virtual processor tool to the said client device without necessarily transmitting any of the virtual processor tools which were translated from the selected class, other than the selected tool.

30. A computer system as claimed in Claim 27 in which the selected virtual processor tool is translated into native code prior to transmission across the transmission means.

31. A computer system as claimed in Claim 27 in which the selected virtual processor tool is translated into native code by the client device after transmission across the transmission means.

32. A computer system as claimed in Claim 18 in which the transmission means comprises or includes a wireless network (513).

33. A computer system as claimed in Claim 32 in which the client devices are mobile phones (530, 550).

34. A computer system as claimed in Claim 32 in which the client devices are hand-held computers.

35. A computer system as claimed in Claim 32 in which the client devices are games consoles.

36. A computer program for executing a method as claimed in any one of Claims 1 to 16.

37. A data carrier which carries a computer program for executing a program as claimed in Claim 36 or a method as claimed in any one of Claims 1 to 16.

38. A data stream representative of a computer program for executing a program as claimed in Claim 36 or a method as claimed in any one of Claims 1 to 16.

## Patentansprüche

1. Verfahren für das Laden eines objektorientierten Computerprogramms, welches Code in der Form von Klassen umfasst, wobei jede davon eine Vielzahl von Methoden (481) umfasst, wobei das Verfahren **gekennzeichnet ist durch**
(a) die Auswahl für das Ausführen einer der Methoden von einer der Klassen; und
(b) Laden der ausgewählten Methode in eine Ausführungsumgebung, ohne unbedingt die Gesamtheit der ausgewählten Klasse in die Ausführungsumgebung zu laden.

2. Verfahren gemäß Anspruch 1, in welchem die ausgewählte Methode geladen wird, ohne unbedingt sämtliche Methoden der ausgewählten Klasse in die Ausführungsumgebung zu laden.

3. Verfahren gemäß Anspruch 1, in welchem die ausgewählte Methode geladen wird, ohne unbedingt irgendeine der Methoden der ausgewählten Klasse in die Ausrührungsumgebung zu laden, mit Ausnahme der ausgewählten Methode.

4. Verfahren gemäß Anspruch 1, welches das Kompilieren der ausgewählten Methode umfasst, ohne unbedingt alle Methoden der ausgewählten Klasse zu kompilieren.

5. Verfahren gemäß Anspruch 1, welches das Kompilieren einer ausgewählten Methode umfasst, ohne unbedingt irgendeine der Methoden der ausgewählten Klasse kompiliert wird, mit Ausnahme der ausgewählten Methode.

6. Verfahren gemäß Anspruch 1, welches das Übertragen der ausgewählten Methode über ein Kommunikationsnetzwerk (450) von einem Server (410) zu einer Client-Vorrichtung (430, 440) umfasst, auf welchem die ausgewählte Methode laufen soll, ohne unbedingt alle Methoden der ausgewählten Klasse zu übertragen.

7. Verfahren gemäß Anspruch 1, welches die Übertragung der ausgewählten Methode über ein Kommunikationsnetzwerk (450) von einem Server (410) auf eine Client-Vorrichtung (430, 440) umfasst, auf welchem die ausgewählte Methode laufen soll, ohne unbedingt eine der Methoden der ausgewählten Klasse zu übertragen, mit Ausnahme der ausgewählten Methode.

8. Verfahren gemäß Anspruch 1, in welchem die Klassen Java-Klassen sind.

9. Verfahren gemäß Anspruch 1, welches den vorausgehenden Schritt der Übersetzung der Klassen in eine Vielzahl von virtuellen Prozessor-Tools (482), die den Befehlssatz eines virtuellen Prozessors nutzen, umfasst.

10. Verfahren gemäß Anspruch 9, in welchem der Schritt für die Auswahl einer der Ausführungsmethoden, die Auswahl eines Tools aus den virtuellen Prozessortools umfasst.

11. Verfahren gemäß Anspruch 10, welches das Kompilieren und das Laden des ausgewählten virtuellen Prozessortools umfasst, ohne unbedingt alle virtuellen Prozessortools, die aus der ausgewählten Klasse übersetzt wurden, zu kompilieren und in die Ausführungsumgebung zu laden,.

12. Verfahren gemäß Anspruch 10, welches das Kompilieren und Laden des ausgewählten virtuellen Prozessortools umfasst, ohne unbedingt irgendeines der virtuellen Prozessortools, welche aus den ausgewählten Klassen übersetzt wurden, zu kompilieren und in die Ausführungsumgebung zu laden, mit Ausnahme des ausgewählten Tools.

13. Verfahren gemäß Anspruch 10, welches die Übertragung des ausgewählten virtuellen Prozessortools über ein Kommunikationsnetzwerk (450) von einem Server (410) zu einer Client-Vorrichtung (430, 440) umfasst, auf welchem die ausgewählte Methode laufen soll, ohne unbedingt alle virtuellen Prozessortools, welche aus der ausgewählten Klasse übersetzt wurden, zu übertragen.

14. Verfahren gemäß Anspruch 10, welches die Übermittlung des ausgewählten virtuellen Prozessortools über ein Kommunikationsnetzwerk (415) von einem Server (410) auf eine Client-Vorrichtung (430; 440) umfasst, auf welchen die ausgewählte Methode laufen soll, ohne unbedingt irgendeines der virtuellen Prozessortools, welche aus der ausgewählten Klasse übersetzt wurden, zu übertragen.

15. Verfahren gemäß Anspruch 13 oder Anspruch 14, welches die Kompilierung des ausgewählten virtuellen Prozessortools in Native Code (Maschinensprache) vor der Übertragung über das Kommunikationsnetzwerk umfasst.

16. Verfahren gemäß Anspruch 13 oder Anspruch 14, welches das Kompilieren der virtuellen Prozessortools in Native Code (Maschinensprache) an der Client-Vorrichtung nach der Übertragung über das Kommunikationsnetzwerk umfasst.

17. Computersystem umfassend:
eine Ausführungsumgebung,
Mittel für das Laden in die Ausführungsumgebung eines objektorientierten Computerprogramms, welches Code in der Form von Klassen an der Client-Vorrichtung umfasst, wobei jede eine Vielzahl von Methoden (481) beinhaltet, und
Mittel für das Auswählen für die Ausführung einer der Methoden von einer der Klassen;
**dadurch gekennzeichnet, dass**
das System in Funktion ist, um die ausgewählte Methode in die Ausführungsumgebung zu laden, ohne unbedingt die gesamten ausgewählten Klassen in die Ausführungsumgebung zu laden.

18. Computersystem gemäß Anspruch 17, welches ferner einen Server (410) in Datenübertragung mit Hilfe eines Übertragungsmittels (450) mit einer Vielzahl von Client-Vorrichtungen (430, 440) umfasst, wobei jede eine entsprechende Ausführungsumgebung aufweist.

19. Computersystem gemäß Anspruch 18, welches die ausgewählte Methode von dem Server zu den Client-Vorrichtungen überträgt, ohne unbedingt sämtliche der ausgewählten Klassen zu übertragen.

20. Computersystem gemäß Anspruch 18, welches die ausgewählte Methode von dem Server zu den Client-Vorrichtungen überträgt, ohne unbedingt irgendeine Methode der ausgewählten Klasse zu übertragen, mit Ausnahme der ausgewählten Methode.

21. Computersystem gemäß Anspruch 18, in welchem die ausgewählte Methode vor der Übertragung vom Server kompiliert wird.

22. Computersystem gemäß Anspruch 18, in welchem die ausgewählte Methode von der Client-Vorrichtung nach der Übertragung kompiliert wird.

23. Computersystem gemäß Anspruch 18, in welchem der Server so konfiguriert ist, dass er eine aktualisierte Methode zu einer Client-Vorrichtung überträgt, wenn er ermittelt, dass die Client-Vorrichtung eine veralterte Methode anwendet.

24. Computersystem gemäß Anspruch 18, in welchem der Server so konfiguriert ist, dass er eine aktualisierte Methode einer Client-Vorrichtung überträgt, wenn diese veralterte Methode von der Client-Vorrichtung angefordert wird.

25. Computersystem gemäß Anspruch 18, in welchem der Server so konfiguriert ist, dass er die Methoden, wie angefordert, von einer anfordernden Client-Vorrichtung überträgt, wobei die anfordernde Client-Vorrichtung so konfiguriert ist, dass sie die empfangenen Methoden dynamisch in ihre Ausführungsumgebung einbindet.

26. Computersystem gemäß Anspruch 18, in welchem der Server eine Vielzahl von virtuellen Prozessortools (482) speichert, wobei die Tools einen Befehlssatz eines virtuellen Prozessors benutzen und wobei sie eine Übersetzung eines oder mehrerer Klassen des objektorientierten Programms darstellen.

27. Computersystem gemäß Anspruch 26, in welchem das Mittel für die Auswahl einer der Ausführungsmethoden Mittel für die Auswahl eines der virtuellen Prozessortools umfasst.

28. Computersystem gemäß Anspruch 27, in welchem der Server die ausgewählten virtuellen Prozessortools an die ausgewählten Client-Vorrichtung überträgt, ohne unbedingt sämtliche virtuellen Prozessortools zu übertragen, welche aus der ausgewählte Klasse übersetzt wurden.

29. Computersystem gemäß Anspruch 27, in welchem der Server die ausgewählten virtuellen Prozessortools an die ausgewählten Client-Vorrichtung überträgt, ohne unbedingt irgendeines der virtuellen Prozessortools zu übertragen, welche aus der ausgewählten Klasse übersetzt wurden, mit Ausnahme des ausgewählten Tools.

30. Computersystem gemäß Anspruch 27, in welchem das ausgewählte virtuelle Prozessortool vor der Übertragung über die Übertragungsmittel in Native Code (Maschinensprache) übersetzt wird.

31. Computersystem gemäß Anspruch 27, in welchem das ausgewählte virtuelle Prozessortool von der Client-Vorrichtung nach der Übertragung über die Übertragungsmittel in Native Code (Maschinensprache) übersetzt wird.

32. Computersystem gemäß Anspruch 18, in welchem die Übertragungsmittel ein drahtloses Netzwerk (513) umfassen oder beinhalten.

33. Computersystem gemäß Anspruch 32, in welchem die Client-Vorrichtungen mobile Telefone sind (530, 550).

34. Computersystem gemäß Anspruch 32, in welchem die Client-Vorrichtungen tragbare Computer sind.

35. Computersystem gemäß Anspruch 32, in welchem die Client-Vorrichtungen Spielkonsolen sind.

36. Computerprogramm für das Ausführen einer Methode gemäß einer der Ansprüche 1 bis 16.

37. Datenträger, welche ein Computerprogramm für die Ausführung eines Programms gemäß Anspruch 36 oder einer Methode gemäß einer der Ansprüche 1 bis 16 trägt.

38. Datenstromtyp für ein Computerprogramm zur Ausführung eines Programms gemäß Anspruch 36 oder einer Methode gemäß einer der Ansprüche 1 bis 16.

## Revendications

1. Procédé de chargement d'un programme informatique orienté objet comprenant du code fourni sous la forme de classes contenant chacune une pluralité de méthodes (481), le procédé étant **caractérisé par**:
(a) la sélection pour exécution d'une des méthodes d'une des classes, et
(b) le chargement de la méthode sélectionnée dans un environnement d'exécution sans nécessairement charger dans l'environnement d'exécution la totalité de la classe sélectionnée.

2. Procédé suivant la revendication 1 dans lequel la méthode sélectionnée est chargée sans nécessairement charger dans l'environnement d'exécution l'ensemble des méthodes de la classe sélectionnée.

3. Procédé suivant la revendication 1 dans lequel la méthode sélectionnée est chargée sans nécessairement charger dans l'environnement d'exécution l'une quelconque des méthodes de la classe sélectionnée autre que la méthode sélectionnée.

4. Procédé suivant la revendication 1 comprenant la compilation de la méthode sélectionnée sans nécessairement compiler l'ensemble des méthodes de la classe sélectionnée.

5. Procédé suivant la revendication 1 comprenant la compilation d'une méthode sélectionnée sans nécessairement compiler l'une quelconque des méthodes de la classe sélectionnée autre que la méthode sélectionnée.

6. Procédé suivant la revendication 1 comprenant la transmission de la méthode sélectionnée à travers un réseau de communication (450) d'un serveur (410) à un dispositif client (430, 440) sur lequel la méthode sélectionnée doit être exécutée, sans nécessairement transmettre l'ensemble des méthodes de la classe sélectionnée.

7. Procédé suivant la revendication 1 comprenant la transmission de la méthode sélectionnée à travers un réseau de communication (450) d'un serveur (410) à un dispositif client (430, 440) sur lequel la méthode sélectionnée doit être exécutée, sans nécessairement transmettre l'une quelconque des méthodes de la classe sélectionnée autre que la méthode sélectionnée.

8. Procédé suivant la revendication 1 dans lequel les classes sont des classes Java.

9. Procédé suivant la revendication 1 comprenant l'étape préliminaire de traduction des classes en une pluralité d'outils processeur virtuel (482) qui utilisent le jeu d'instructions d'un processeur virtuel.

10. Procédé suivant la revendication 9 dans lequel l'étape de sélection d'une des méthodes pour exécution comprend la sélection d'un des outils processeur virtuel.

11. Procédé suivant la revendication 10 comprenant la compilation et le chargement de l'outil processeur virtuel sélectionné sans nécessairement compiler et charger dans l'environnement d'exécution l'ensemble des outils processeur virtuel qui ont été traduits de la classe sélectionnée.

12. Procédé suivant la revendication 10 comprenant la compilation et le chargement de l'outil processeur virtuel sélectionné sans nécessairement compiler et charger dans l'environnement d'exécution l'un quelconque des outils processeur virtuel qui ont été traduits de la classe sélectionnée autre que l'outil sélectionné.

13. Procédé suivant la revendication 10 comprenant la transmission de l'outil processeur virtuel sélectionné à travers un réseau de communication (450) d'un serveur (410) à un dispositif client (430, 440) sur lequel la méthode sélectionnée doit être exécutée, sans nécessairement transmettre l'ensemble des outils processeur virtuel qui ont été traduits de la classe sélectionnée.

14. Procédé suivant la revendication 10 comprenant la transmission de l'outil processeur virtuel sélectionné à travers un réseau de communication (450) d'un serveur (410) à un dispositif client (430, 440) sur lequel la méthode sélectionnée doit être exécutée, sans nécessairement transmettre l'un quelconque des outils processeur virtuel qui ont été traduits de la classe sélectionnée.

15. Procédé suivant la revendication 13 ou 14 comprenant la compilation de l'outil processeur virtuel sélectionné en code natif avant transmission à travers le réseau de communication.

16. Procédé suivant la revendication 13 ou 14 comprenant la compilation de l'outil processeur virtuel sélectionné en code natif au niveau du dispositif client après transmission à travers le réseau de communication.

17. Système informatique comprenant un environnement d'exécution, un moyen pour charger dans l'environnement d'exécution un programme informatique orienté objet comprenant du code sous la forme de classes contenant chacune une pluralité de méthodes (481), et un moyen pour sélectionner pour exécution une des méthodes d'une des classes ; **caractérisé en ce que** le système peut fonctionner pour charger la méthode sélectionnée dans l'environnement d'exécution sans nécessairement charger la totalité de la classe sélectionnée dans l'environnement d'exécution.

18. Système informatique suivant la revendication 17 comprenant en outre un serveur (410) en communication par le biais d'un moyen de transmission (450) avec une pluralité de dispositifs clients (430, 440) ayant chacun un environnement d'exécution respectif.

19. Système informatique suivant la revendication 18 qui transmet la méthode sélectionnée du serveur audit dispositif client sans nécessairement transmettre l'ensemble des méthodes de la classe sélectionnée.

20. Système informatique suivant la revendication 18 qui transmet la méthode sélectionnée du serveur audit dispositif client sans nécessairement transmettre l'une quelconque des méthodes de la classe sélectionnée autre que la méthode sélectionnée.

21. Système informatique suivant la revendication 18 dans lequel la méthode sélectionnée est compilée par le serveur avant transmission.

22. Système informatique suivant la revendication 18 dans lequel la méthode sélectionnée est compilée par le dispositif client après transmission.

23. Système informatique suivant la revendication 18 dans lequel le serveur est configuré pour transmettre une méthode mise à jour à un dispositif client lorsqu'il détermine que ledit dispositif client utilise une méthode dépassée.

24. Système informatique suivant la revendication 18 dans lequel le serveur est configuré pour transmettre une méthode mise à jour à un dispositif client lorsque cette méthode mise à jour fait l'objet d'une requête par ledit dispositif client.

25. Système informatique suivant la revendication 18 dans lequel le serveur est configuré pour transmettre des méthodes faisant l'objet d'une requête par un dispositif client appelant, le dispositif client appelant étant configuré pour lier les méthodes reçues de manière dynamique dans son environnement d'exécution.

26. Système informatique suivant la revendication 18 dans lequel le serveur mémorise une pluralité d'outils processeur virtuel (482), lesdits outils utilisant un jeu d'instructions d'un processeur virtuel et étant une traduction d'une ou de plusieurs classes dudit programme orienté objet.

27. Système informatique suivant la revendication 26 dans lequel le moyen pour sélectionner une des méthodes pour exécution comprend un moyen pour sélectionner un des outils processeur virtuel.

28. Système informatique suivant la revendication 27 dans lequel le serveur transmet l'outil processeur virtuel sélectionné audit dispositif client sans nécessairement transmettre l'ensemble des outils processeur virtuel qui ont été traduits de la classe sélectionnée.

29. Système informatique suivant la revendication 27 dans lequel le serveur transmet l'outil processeur virtuel sélectionné audit dispositif client sans nécessairement transmettre l'un quelconque des outils processeur virtuel qui ont été traduits de la classe sélectionnée autre que l'outil sélectionné.

30. Système informatique suivant la revendication 27 dans lequel l'outil processeur virtuel sélectionné est traduit en code natif avant transmission à travers le moyen de transmission.

31. Système informatique suivant la revendication 27 dans lequel l'outil processeur virtuel sélectionné est traduit en code natif par le dispositif client après transmission à travers le moyen de transmission.

32. Système informatique suivant l'invention 18 dans lequel le moyen de transmission comprend ou inclut un réseau sans fil (513).

33. Système informatique suivant la revendication 32 dans lequel les dispositifs clients sont des téléphones mobiles (530, 550).

34. Système informatique suivant la revendication 32 dans lequel les dispositifs clients sont des ordinateurs portatifs.

35. Système informatique suivant la revendication 32 dans lequel les dispositifs clients sont des consoles de jeu.

36. Programme informatique pour exécuter un procédé suivant l'une quelconque des revendications 1 à 16.

37. Support de données qui supporte un programme informatique pour exécuter un programme suivant la revendication 36 ou un procédé suivant l'une quelconque des revendications 1 à 16.

38. Flux de données représentatif d'un programme informatique pour exécuter un programme suivant la revendication 36 ou un procédé suivant l'une quelconque des revendications 1 à 16.
